# EUROPEAN PATENT SPECIFICATION

(11) **EP 1 697 194 B1**
(45) Date of publication and mention of the grant of the patent: **19.11.2008**
(21) Application number: 04765580.8
(22) Date of filing: 24.09.2004
(51) Int. Cl.: B61F 9/00, B61H 13/00, B61H 11/02, B60T 7/12

(54) **LATERAL ACCELERATION CONTROL SYSTEM**
QUERBESCHLEUNIGUNGSSTEUERSYSTEM
SYSTEME DE COMMANDE DE L'ACCELERATION LATERALE

(30) Priority: 26.09.2003 GB 0322604
(43) Date of publication of application: 06.09.2006
(73) Proprietor: Bombardier Transportation GmbH, 10785 Berlin (DE)
(72) Inventor: SCHÜLLER, Uwe, 90441 Nürnberg (DE); LITFIN, Sven, 01309 Dresden (DE)
(74) Representative: Broydé, Marc
(86) International application number: PCT/EP2004/010734
(87) International publication number: WO 2005/030554

(56) References cited:
- WO-A-01/89904
- DE-C- 19 953 677
- GB-A- 2 371 121
- US-A- 5 622 338
- US-A- 5 924 654
- US-B1- 6 397 129

## Description

The present invention relates to a device for controlling the lateral acceleration-of a rail-mounted vehicle, and is particularly adapted to the control of such acceleration in passenger railcars. Such a device is disclosed in document GB 2371121, disclosing the preamble to claim 1. The invention also relates to a method for controlling the lateral acceleration of a rail-mounted vehicles in particular for reducing lateral acceleration to passenger acceptable levels, as described for example in document DE 19953677.

When a rail vehicle traverses a curved track section, it is subjected to a radially directed acceleration towards the centre of the curve. If the curved track is banked, some or all of the force required to bring about this acceleration may be provided by forces normal to the plane of the track. This force is experienced by the passenger as an "upward" acting acceleration acting normally through the vehicle floor or seats. If the track is only partially banked or not banked at all, the force will be provided by lateral forces acting upon the vehicle, primarily on the flange of the outermost wheel. Such lateral forces tend to throw passengers sideways within the vehicle and are the cause of much passenger discomfort. Excess lateral force is also detrimental to the track, providing a force acting to shift the rails and their sleepers or foundations sideways. It is also the cause of increased wear on the running gear of the rail vehicle, requiring increased maintenance of the wheel profiles, in particular the wheel flanges, in order to maintain safety.

Track sections which are insufficiently banked for a given vehicle speed are determined to have a cant deficiency which is expressed in a value of millimetres for a given speed range. In order to increase train stability and provide enhanced passenger comfort when negotiating such track sections, tilting trains have been developed. By tilting the car body with respect to the bogies or wheel sets using e.g. active suspension systems, the force acting on the train may once more be directed normally rather than laterally, through the car body. This tilting effect may fully or partially overcome the lateral forces.

For main line operations, national and international norms for maximum lateral acceleration and cant deficiency apply. International Norm UIC 518 determines a maximum acceptable cant deficiency of between 130 and 165 mm depending upon factors such as track condition, vehicle maximum speed and type of vehicle. This corresponds to a maximum lateral acceleration of approximately 1 m/s².

Track integrated train control systems are also known, which may control the maximum speed of the train at a given point on a rail network. Such integrated systems may use data related to the track configuration to limit the speed of the train. By taking the radius of a given track curvature, the speed of the train will determine the lateral acceleration at that location. Under certain conditions, limits of 2 m/s² may be permitted for maximum lateral acceleration.

In the case of trams or street-cars where banking and tilting are generally not convenient, local norms tend to apply. Similar values for lateral acceleration of 1 m/s² are applied as limits for passenger comfort and safety.

Devices are known for use in high-speed trains with tilting car bodies, wherein the estimated value of the lateral acceleration is used to determine the value of tilting. Accelerometers may be located at various points in the vehicle for providing feedback of the local value of lateral acceleration. A problem in this connection is to make a reasonable estimate of the real lateral acceleration because the measured lateral acceleration is influenced by a plurality of disturbing sources. These sources may include minor rail deformities, points, and other such factors. To overcome these disturbances, the signal from the accelerometers is filtered to remove spurious, typically highfrequency signals. A device is known from WO 99/37520, which uses an accelerometer located in the front bogie of a rail vehicle which provides a signal via a low-pass filter, which may be used to control tilting of the car body.

Lateral accelerometers have also been used to detect truck hunting, i.e. a condition in which the a wheel set or truck of a rail vehicle begins to oscillate from side to side between the rails of the track while being moved along the track by a train locomotive. In response to this problem, brakes are applied to change the period of the oscillation and reduce its amplitude. In US 5,622,338 a truck hunting detection and abatement apparatus is described, which comprises a sensor means for measuring lateral acceleration of a rail car truck in a direction transverse to the rail, and control means of a brake controller of the corresponding individual rail car. The control means is responsive to the sensor means for comparing the measured acceleration with a predetermined acceleration limit. The control means is also responsive to brake signals transmitted by a head end unit positioned in the train locomotive for application of the brakes to slow or stop the train. Upon detection of the truck hunting condition, the control means applies the brakes of the individual rail car, abating the condition.

In DE 199 53 677, signals from a vertical accelerometer and, optionally, from a lateral accelerometer are integrated twice to assess a vertical displacement ΔS of a wheel set bearing with respect to a fixed coordinate system. Before integration, the high frequency components of the acceleration signals are filtered out, in order to eliminate noise components. The assessed displacement ΔS is compared to a higher and a lower threshold to detect derailment of the rail vehicle. If the acceleration is measured at more than one location on wheel set or on the running gear, it becomes possible to detect not only derailment but also other conditions such as breakage of a wheel, and to stop the vehicle.

As mentioned above, there are circumstances where tilting of the rail vehicle is not possible or not desirable and where banking of the track is also partially or wholly excluded. In the case of trams and similar light rail vehicles, the maximum lateral acceleration values must be adhered to by careful control of the speed of the vehicle on negotiating the curved track section. The driver of the vehicle must be trained to read the track ahead correctly, taking into account any signals or indications, and adjust the vehicle speed accordingly to remain within the limit for lateral acceleration.

Recent investigations of tram and tramway condition have indicated that such limits are not generally respected and excess values of lateral acceleration are frequently encountered. This has manifested itself in the form of unacceptable levels of wear on rails and wheels requiring increased maintenance to maintain acceptable standards of safety. These high levels of lateral acceleration can also cause increased stress on important components such as the wheel-sets, suspension and bogie frame. Such stress leads to increased wear on these components too, necessitating frequent inspection and early part replacement. One of the main causes of this problem appears to be a general lack of experience of the drivers in controlling the vehicle. Increased use of less qualified or less experienced personnel within the public transport sector has exacerbated this situation.

US 5,924,654 suggests the use of accelerometers located on a truck (bogie) of a railroad car for detecting lateral forces or side-to-side movement. A signal may be relayed to the locomotive for the engineer to take appropriate action in the running of the train and eliminating the hunting phenomena. For example, the engineer might slow down the train a couple of miles per hour which would be sufficient to eliminate the truck hunting and thereby reduce wear on various parts of the car including the trucks and the draft gear. However, accelerometers located on the running gear or bogie of the vehicle may be exposed to harsh condition.

It has therefore become desirable to provide a simple system whereby the lateral acceleration of a rail vehicle may be monitored to provide an indication as to when and under which conditions it exceeds acceptable values. This may be achievable according to the present invention by providing a rail vehicle comprising a motor providing driving force to the vehicle, a speed controller with an accelerometer mounted to a vehicle body of the vehicle, the accelerometer being arranged to detect lateral acceleration of the rail vehicle and to provide a signal indicative of the lateral acceleration to the speed controller, the speed controller controlling the speed of the rail vehicle in response to the signal, wherein the signal is compared with a preset value corresponding to a preset acceleration and on exceeding the preset value a speed reduction signal is generated to reduce the driving force of the motor and the speed the of the vehicle. It may also be desirable to maintain a record of the measured values of lateral acceleration whereby statistical data concerning the forces encountered by an individual vehicle or track section may be collected. Such data may then be used for planning maintenance or for scheduling relaying of problematic track sections. Data may also be used for monitoring driver compliance. Individual drivers who fail to adhere to certain standards may be targeted for education or disciplinary action.

The preset value may be set at 1 m/s² . This value has been found to offer acceptable levels of passenger comfort and, in the context of trams or street-cars, corresponds to acceptable levels of mechanical stress and wear on the vehicle components. Alternatively, a higher value may be used of up to 2 m/s² . For trains, in particular high-speed trains where most passengers are seated, values of 2 m/s² have been found to be acceptable. In a yet further alternative, the predetermined value may be variable according to factors such as the vehicle speed, vehicle loading etc.

The accelerometer may be mounted to the vehicle body at the furthest most forward point whereby the enhanced motion at this position provides greater values for the local acceleration. It has in particular been found desirable to include the accelerometer within the carriage body whereby it is not subjected to the harsh environmental conditions present on the running gear and bogies. Because of the good force transmission between bogie and vehicle body, the readings for acceleration within the body correspond largely to the values encountered by the bogie. Furthermore, to the extent that it relates to passenger comfort, the value for acceleration within the vehicle body is most representative. Preferably, the accelerometer is located above the mid-line of the bogie but alternative locations may be determined by experiment according to the most effective signal reception or other constructional factors.

According to further embodiments of the invention, a plurality of accelerometers may be provided located at different points within the vehicle. This is especially desirable for vehicles having lengths of 30 metres or more to avoid cases where the driver accelerates rapidly after only the first part of the vehicle has cleared the curve. In such cases, it may be desirable to include an accelerometer every 10 metres or less along the length of the vehicle. By installing the accelerometer within the vehicle body rather than on the running gear or bogie, less harsh conditions will be encountered and accelerometers of lower specification and cost may be used. Due to such lower cost, the incorporation of a large number of such devices within a vehicle is possible. If a plurality of accelerometers are used, they may be connected in OR configuration whereby any one signal exceeding a predetermined limit will cause the speed of the vehicle to be reduced. Alternatively, only certain accelerometers may be operable at a given moment, e.g. depending upon the direction of motion of the vehicle.

The present invention is applicable to all rail vehicles. In particular, it is within the scope of the present invention that tilting trains could be adapted to include devices indicating the level of lateral acceleration, whereby the signal from such a device could be used to control the speed of the train in the event that values for lateral acceleration in curves were to approach or exceed the maximum permitted values. In the case of such tilting trains, the measured value could be either the overall lateral acceleration of the vehicle or the local lateral acceleration as measured within the tilted co-ordinate frame of the carriage. The former measurement is representative of forces between the track and the vehicle while the latter is representative of sideways forces acting on the passengers.

According to a further aspect of the invention a method of controlling the lateral acceleration of a rail vehicle is disclosed comprising the steps of providing an accelerometer located to produce a signal indicative of the lateral acceleration of the rail vehicle, comparing the signal indicative of the lateral acceleration of the rail vehicle to a predetermined value and in the case that the signal exceeds the predetermined value, reducing the speed of the rail vehicle.

Embodiments of the present invention will now be described, by way of example only, having reference to the accompanying figures, in which:
Figure 1 is a schematic block diagram of an embodiment of a rail vehicle control system incorporating the present invention;
Figure 2 is a schematic block diagram of the signal transmission for the embodiment of Figure 1;

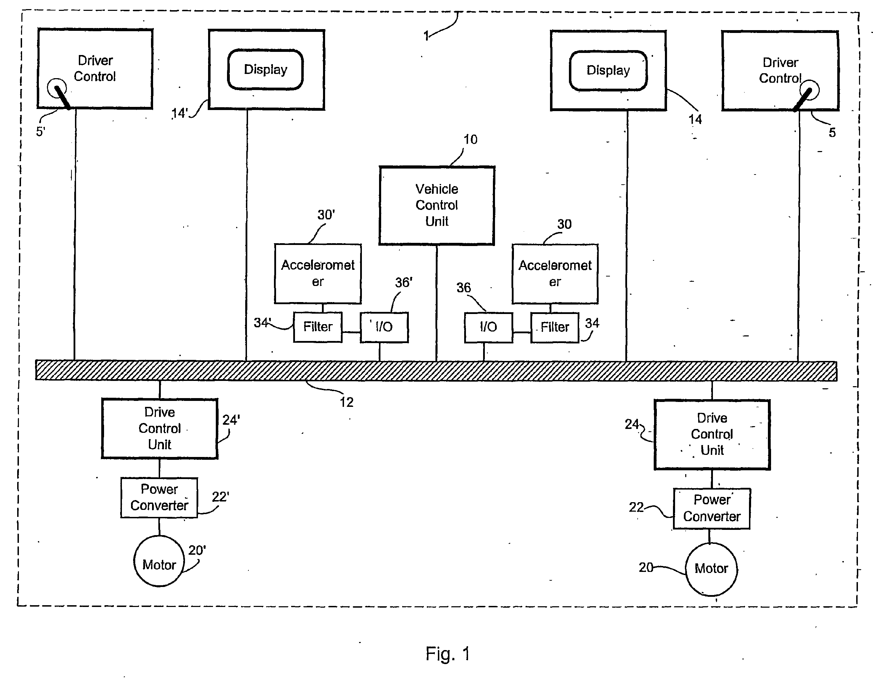

According to the embodiment as disclosed in Figure 1, there is shown a schematic block diagram of a light rail vehicle 1. Vehicle 1 according to this embodiment is provided with a pair of driver controls 5, 5' located one at each end of the vehicle 1 thereby permitting driving in either direction. Operation of the vehicle 1 is under the control of a vehicle control unit 10 which communicates with a main vehicle bus 12 serving to carry data and signals for operation of the vehicle and its auxiliaries. The vehicle control unit 10 also communicates with displays 14, 14' located within the driver's cabins, providing information to the driver concerning various aspects of the status of the vehicle 1

The vehicle 1 is provided with a pair of motors 20, 20', each powered by a power converter module 22, 22' as is customary in the art. Control of the power converter modules 22, 22' is provided by individual drive control units 24, 24', each of which receives control signals via connection to the main vehicle bus 12.

According to the present invention, the vehicle 1 is provided with accelerometers 30, 30'. Accelerometers 30, 30' are specifically arranged to provide a signal indicative of the value of lateral acceleration experienced by the vehicle 1 as it progresses along a given track section. These accelerometers may be located at convenient locations on the carriage body.

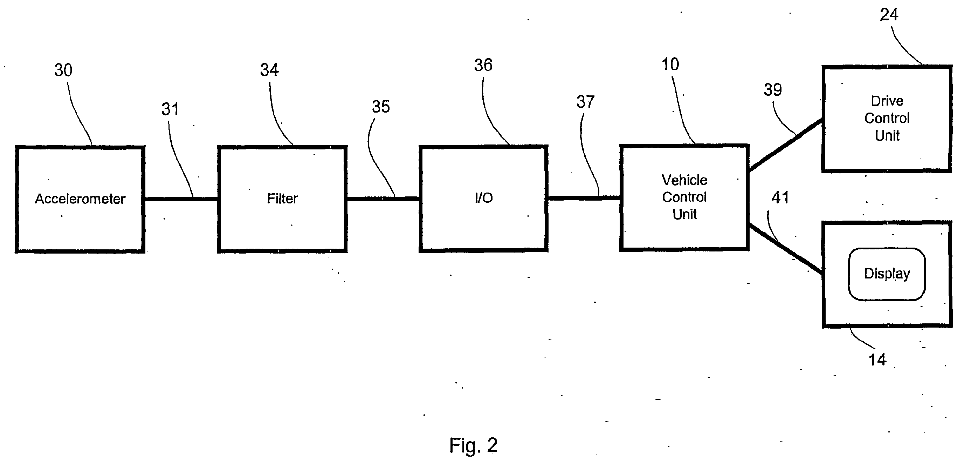

The accelerometers 30, 30' are connected to the main vehicle bus 12 through the intermediary of appropriate filters 34, 34' and input/output devices 36, 36', the operation of which will be further described below with further reference to Figure 2.

The operation of the rail vehicle control system will now be described with reference to Figure 1 and to Figure 2, which represents a schematic block diagram of the signal transmission for a single accelerometer 30 in relation to a single drive control unit 24. In use, accelerometer 30 is activated by the presence of on-board power and a vehicle speed v > 0 km/h. Under these conditions the signal output 31 of the accelerometer 30 is continuously monitored to provide an indication of the lateral acceleration of the vehicle 1. Signal output 31 is provided as input to filter 34, which provides plausibility monitoring on the basis of both temporal and quantitative criteria. By providing effectively a low-pass filter component, high frequency values for acceleration due to localised forces acting on the vehicle 1 may be filtered out. Values of a lower frequency, corresponding to a curved track section of more than momentary duration, exceeding a preset value corresponding to 1 m/s² would generate a value of 1 at the filter output 35. When filter output 35 goes high, it causes input/output device 36 to place a reduce speed signal 37 onto the main vehicle bus 12 which is transmitted to the vehicle control unit 10. In response to reduce speed signal 37, vehicle control unit 10 provides a motor zero signal 39 to the drive control unit 24, which causes the power to the motor 20 to be reduced to zero. Motor zero signal 39 overrides the input drive signal provided by the driver via driver control 5 but may take into account any concurrent safety related processes. The drive control unit 24 regulates the power converter module 22 to allow the motor 20 to free-wheel. In certain cases of excess speed, the drive control unit 24 may also cause active braking of the vehicle 1.

In parallel to the control of traction power to the motor 20, the vehicle control unit 10 also provides an excess lateral acceleration signal 41 to the driver's display 14 indicating that the lateral acceleration monitoring system is in operation. According to a particular embodiment of the present invention, the driver is then forced to return the driver control 5 to the zero position in order to reset the system. Once the system is reset, traction may once again be restored by operation of the driver control 5. The vehicle 1 will accelerate, to the requested speed and the lateral acceleration monitoring system will continue to monitor for further excess values of lateral acceleration.

In the present description of the operation of the device of Figure 2, reference has been made to only one of the accelerometers. Two or more such devices may operate and provide signals concurrently whereby a signal monitoring device or the vehicle control unit determines the presence of a reduce speed signal or a filter high signal on the basis of preset criteria. Such criteria could include the individual highest value or a balanced average of a number of signals provided by different sensors, e.g. located at different positions on a single bogie or carriage. Alternatively, only a single accelerometer might be operational at a given moment such that depending on the direction of movement of the vehicle, only the foremost device need be monitored.

While the embodiment of Figure 1 includes two accelerometers 30, 30' located at the front and back of the vehicle 1, it is recognised that further sensors may also be used. In particular, in the case of trams and streetcars extremely tight curves may often be encountered. Since these vehicles are frequently capable of very strong linear acceleration, further accelerometers located at intermediate positions may be included within the control system. This is especially desirable for vehicles having lengths of 30 metres or more to avoid cases where the driver accelerates rapidly after only the first part of the vehicle has cleared the curve. In such cases, it may be desirable to include an accelerometer every 10 metres or less along the length of the vehicle.

While the above examples illustrate preferred examples of the present invention it is noted that various other arrangements may also be considered which fall within the scope of the present invention as defined by the appended claims.

## Claims

1. A rail vehicle (1) comprising a vehicle body, a motor (20) providing driving force to the vehicle, a speed controller and an accelerometer, the accelerometer being arranged to detect lateral acceleration of the rail vehicle and to provide a signal indicative of the lateral acceleration to the speed controller, the speed controller controlling the speed of the rail vehicle in response to the signal, wherein the signal is compared with a preset value corresponding to a preset acceleration and on cxcccding the preset value a speed reduction signal is generated to reduce the driving force of the motor and the speed of the vehicle, **characterised in that** the accelerometer (30, 30') is located within the vehicle body.

2. The rail vehicle according to any preceding claim, further comprising a brake and wherein the speed controller controls the brake in response to the signal.

3. The rail vehicle according to any preceding claim, further comprising a filter (34, 34') for removing undesirable frequencies from the signal.

4. The rail vehicle according to any preceding claim, wherein the rail vehicle further comprises a vehicle bus (12) carrying vehicle related data and the signal is provided to the vehicle bus.

5. The rail vehicle according to any preceding claim, wherein the rail vehicle is provided with a recording device for recording the signal.

6. The rail vehicle according to any preceding claim, wherein the rail vehicle is provided with an indicating device (14, 14') for displaying a value of the lateral acceleration to the driver in response to the signal.

7. The rail vehicle according to any preceding claim, wherein the accelerometer is located adjacent the front of the rail vehicle.

8. The rail vehicle according to any preceding claim, wherein the accelerometer is located at the furthest most forward point of the vehicle body.

9. The rail vehicle according to any preceding claim, further comprising a second accelerometer (30, 30').

10. The rail vehicle according to claim 9, wherein the second accelerometer provides a second signal indicative of the lateral acceleration to the speed controller and wherein the signal and the second signal are both compared with a preset value and if either signal exceeds the preset value a speed reduction signal is used to reduce the speed of the vehicle.

11. The rail vehicle according to claim 1 or claim 10, wherein the preset value corresponds to a value of lateral acceleration of approximately 1 m/s².

12. The rail vehicle according to any preceding claim, wherein a plurality of accelerometers (30, 30') are provided located at different points within the vehicle to provide a signal indicative of the value of lateral acceleration experienced by the vehicle.

13. The rail vehicle according to claim 12, wherein the vehicle has a length of 30 metres or more and includes an accelerometer every 10 metres or less along the length of the vehicle.

14. The rail vehicle according to claim 12 or 13, wherein the plurality of accelerometers are connected in OR configuration whereby any one signal exceeding a predetermined limit will cause the speed of the vehicle to be reduced.

15. The rail vehicle according to claim 12 or 13, wherein only certain accelerometers are operable at a given moment depending upon the direction of motion of the vehicle.

16. The rail vehicle according to any preceding claim, wherein the rail vehicle is a tram.

17. A method of controlling the lateral acceleration of a rail vehicle comprising:
providing an accelerometer (30, 30') located within the vehicle body to produce a signal indicative of the lateral acceleration of the rail vehicle;
comparing the signal indicative of the lateral acceleration of the rail vehicle to a predetermined value corresponding to a predetermined acceleration ;
in the case that the signal exceeds the predetermined value, reducing the speed of the rail vehicle by reducing the value of a driving force applied to the rail vehicle

18. The method according to claim 17 wherein the speed of the rail vehicle is reduced by activating a braking device to brake the movement of the rail vehicle.

## Patentansprüche

1. Schienenfahrzeug (1), umfassend einen Wagenkasten einen das Fahrzeug mit Antriebskraft versorgenden Motor (20), einen Geschwindigkeitsregler und einen Beschleunigungsmesser, wobei der Beschleunigungsmesser zum Detektieren von Seitenbeschleunigung des Schienenfahrzeugs und zum Anlegen eines die Seitenbeschleunigung anzeigenden Signals an den Geschwindigkeitsregler angeordnet ist, wobei der Geschwindigkeitsregler die Geschwindigkeit des Schienenfahrzeugs als Reaktion auf das Signal steuert, wobei das Signal mit einem voreingestellten Wert entsprechend einer voreingestellten Beschleunigung verglichen wird und beim Übersteigen des voreingestellten Wertes ein Geschwindigkeitsreduzierungssignal erzeugt wird, um die Antriebskraft des Motors und die Geschwindigkeit des Fahrzeugs zu reduzieren, **dadurch gekennzeichnet, dass** der Beschleunigungsmesser (30, 30') sich innerhalb des Wagenkastens befindet.

2. Schienenfahrzeug nach einem der vorhergehenden Ansprüche, das ferner eine Bremse aufweist und bei dem der Geschwindigkeitsregler die Bremse als Reaktion auf das Signal steuert.

3. Schienenfahrzeug nach einem der vorhergehenden Ansprüche, das ferner ein Filter (34, 34') zum Entfernen unerwünschter Frequenzen aus dem Signal aufweist.

4. Schienenfahrzeug nach einem der vorhergehenden Ansprüche, wobei das Schienenfahrzeug ferner einen fahrzeugbezogene Daten führenden Fahrzeugbus (12) aufweist und das Signal an den Fahrzeugbus angelegt wird.

5. Schienenfahrzeug nach einem der vorhergehenden Ansprüche, wobei das Schienenfahrzeug mit einer Aufzeichnungsvorrichtung zum Aufzeichnen des Signals versehen ist.

6. Schienenfahrzeug nach einem der vorhergehenden Ansprüche, wobei das Schienenfahrzeug mit einer Anzeigevorrichtung (14, 14') versehen ist, um als Reaktion auf das Signal dem Fahrer einen Wert der Seitenbeschleunigung anzuzeigen.

7. Schienenfahrzeug nach einem der vorhergehenden Ansprüche, bei dem der Beschleunigungsmesser sich an die Vorderseite des Schienenfahrzeugs angrenzend befindet.

8. Schienenfahrzeug nach einem der vorhergehenden Ansprüche, bei dem der Beschleunigungsmesser sich an dem am weitesten vorn liegenden Punkt des Fahrzeugaufbaus befindet.

9. Schienenfahrzeug nach einem der vorhergehenden Ansprüche, das ferner einen zweiten Beschleunigungsmesser (30, 30') umfasst.

10. Schienenfahrzeug nach Anspruch 9, bei dem der zweite Beschleunigungsmesser ein zweites die Seitenbeschleunigung anzeigendes Signal an den Geschwindigkeitsregler anlegt und bei dem das Signal und das zweite Signal beide mit einem voreingestellten Wert verglichen werden und, wenn eines der Signale den voreingestellten Wert übersteigt, ein Geschwindigkeitsreduzierungssignal verwendet wird, um die Geschwindigkeit des Fahrzeugs zu reduzieren.

11. Schienenfahrzeug nach Anspruch 1 oder Anspruch 10, bei dem der voreingestellte Wert einem Seitenbeschleunigungswert von etwa 1 m/s² entspricht.

12. Schienenfahrzeug nach einem der vorhergehenden Ansprüche, bei dem mehrere Beschleunigungsmesser (30, 30') bereitgestellt sind, die sich an verschiedenen Punkten innerhalb des Fahrzeugs befinden, um ein den Wert der von dem Fahrzeug erfahrenen Seitenbeschleunigung anzeigendes Signal bereitzustellen.

13. Schienenfahrzeug nach Anspruch 12, bei dem das Fahrzeug eine Länge von 30 m oder mehr hat und mindestens alle 10 m oder weniger längs dem Fahrzeug einen Beschleunigungsmesser aufweist.

14. Schienenfahrzeug nach Anspruch 12 oder 13, bei dem die mehreren Beschleunigungsmesser in ODER-Konfiguration geschaltet sind, wodurch jedes beliebige Signal, das einen vorbestimmten Grenzwert übersteigt, die Reduzierung der Geschwindigkeit des Fahrzeugs verursacht.

15. Schienenfahrzeug nach Anspruch 12 oder 13, bei dem je nach der Bewegungsrichtung des Fahrzeugs in einem bestimmten Augenblick jeweils nur gewisse Beschleunigungsmesser funktionsfähig sind.

16. Schienenfahrzeug nach einem der vorhergehenden Ansprüche, wobei das Schienenfahrzeug eine Straßenbahn ist.

17. Verfahren zum Regeln der Seitenbeschleunigung eines Schienenfahrzeugs, umfassend:
Bereitstellen eines Beschleunigungsmessers (30, 30'), der sich in dem Wagenkasten befindet, um ein die Seitenbeschleunigung des Schienenfahrzeugs anzeigendes Signal zu erzeugen;
Vergleichen des die Seitenbeschleunigung des Schienenfahrzeugs anzeigenden Signals mit einem vorbestimmten Wert, der einer vorbestimmten Beschleunigung entspricht;
in dem Fall, dass das Signal den vorbestimmten Wert übersteigt, Reduzieren der Geschwindigkeit des Schienenfahrzeugs durch Reduzieren des Wertes einer auf das Schienenfahrzeug angewendeten Antriebskraft.

18. Verfahren nach Anspruch 17, bei dem die Geschwindigkeit des Schienenfahrzeugs durch Aktivieren einer Bremsvorrichtung zum Bremsen der Bewegung des Schienenfahrzeugs reduziert wird.

## Revendications

1. Véhicule sur rail comprenant une carrosserie de véhicule, un moteur (20) fournissant une force d'entraînement au véhicule, un dispositif de commande de la vitesse et un accéléromètre, l'accéléromètre étant agencé pour détecter l'accélération latérale du véhicule sur rail et pour fournir un signal indicatif de l'accélération latérale au dispositif de commande de la vitesse, le dispositif de commande de la vitesse commandant la vitesse du véhicule sur rail en réponse au signal, dans lequel le signal est comparé à une valeur prédéfinie correspondant à une accélération prédéfinie et si la valeur prédéfinie est dépassée, un signal de réduction de la vitesse est généré pour réduire la force d'entraînement du moteur et la vitesse du véhicule, **caractérisé en ce que** l'accéléromètre (30, 30') est situé à l'intérieur de la carrosserie du véhicule.

2. Véhicule sur rail selon l'une quelconque des revendications précédentes, comprenant en outre un frein et dans lequel le dispositif de commande de la vitesse commande le frein en réponse au signal.

3. Véhicule sur rail selon l'une quelconque des revendications précédentes, comprenant en outre un filtre (34, 34') destiné à supprimer les fréquences indésirables dans le signal.

4. Véhicule sur rail selon l'une quelconque des revendications précédentes, dans lequel le véhicule sur rail comprend en outre un bus de véhicule (12) transportant les données relatives au véhicule et le signal est fourni au bus de véhicule.

5. Véhicule sur rail selon l'une quelconque des revendications précédentes, dans lequel le véhicule sur rail est équipé d'un dispositif enregistreur destiné à enregistrer le signal.

6. Véhicule sur rail selon l'une quelconque des revendications précédentes, dans lequel le véhicule sur rail est équipé d'un dispositif indicateur (14, 14') destiné à afficher une valeur de l'accélération latérale auprès du conducteur, en réponse au signal.

7. Véhicule sur rail selon l'une quelconque des revendications précédentes, dans lequel l'accéléromètre est situé adjacent à l'avant du véhicule sur rail

8. Véhicule sur rail selon l'une quelconque des revendications précédentes, dans lequel l'accéléromètre est situé au point le plus éloigné vers l'avant de la carrosserie du véhicule.

9. Véhicule sur rail selon l'une quelconque des revendications précédentes, comprenant en outre un second accéléromètre (30, 30').

10. Véhicule sur rail selon la revendications 9, dans lequel le second accéléromètre fournit un second signal indicatif de l'accélération latérale au dispositif de commande de la vitesse, et dans lequel le signal et le second signal sont tous les deux comparés à une valeur prédéfinie et si l'un ou l'autre des signaux dépasse la valeur prédéfinie, un signal de réduction de la vitesse est utilisé pour réduire la vitesse du véhicule.

11. Véhicule sur rail selon la revendication 1 ou la revendication 10, dans lequel la valeur prédéfinie correspond à une valeur d'accélération latérale d'environ 1 m/s².

12. Véhicule sur rail selon l'une quelconque des revendications précédentes, dans lequel une pluralité d'accéléromètres (30, 30') est fournie et située en différents points à l'intérieur du véhicule afin de fournir un signal indicatif de la valeur de l'accélération latérale que connaît le véhicule.

13. Véhicule sur rail selon la revendication 12, dans lequel le véhicule a une longueur de 30 mètres, ou plus, et inclut un accéléromètre tous les 10 mètres, ou moins, sur toute la longueur du véhicule.

14. Véhicule sur rail selon les revendications 12 ou 13, dans lequel la pluralité d'accéléromètres est connectée en une configuration OU, grâce à quoi un signal quelconque dépassant une limite prédéterminée provoque la réduction de la vitesse du véhicule.

15. Véhicule sur rail selon les revendications 12 ou 13, dans lequel seuls certains accéléromètres peuvent fonctionner à un moment donné, en fonction de la direction du déplacement du véhicule.

16. Véhicule sur rail selon l'une quelconque des revendications précédentes, dans lequel le véhicule sur rail est un tramway.

17. Procédé de commande de l'accélération latérale d'un véhicule sur rail comprenant :
la fourniture d'un accéléromètre (30, 30') situé à l'intérieur de la carrosserie du véhicule afin de produire un signal indicatif de l'accélération latérale du véhicule sur rail ;
la comparaison du signal indicatif de l'accélération latérale du véhicule sur rail jusqu'à une valeur prédéterminée correspondant à une accélération prédéterminée ;
dans le cas où le signal dépasse la valeur prédéterminée, la réduction de la vitesse du véhicule sur rail en réduisant la valeur d'une force d'entraînement appliquée au véhicule sur rail.

18. Procédé selon la revendication 17, dans lequel la vitesse du véhicule sur rail est réduite en actionnant un dispositif de freinage destiné à freiner le mouvement du véhicule sur rail.
